# EUROPÄISCHE PATENTSCHRIFT

(11) **EP 1 476 056 B1**
(45) Veröffentlichungstag und Bekanntmachung des Hinweises auf die Patenterteilung: **20.06.2007**
(21) Anmeldenummer: 03709606.2
(22) Anmeldetag: 12.02.2003
(51) Int. Cl.: A47F 9/04, G07G 1/00

(54) **SELBSTBEDIENUNGS-WARENERFASSUNGSPLATZ**
SELF-SERVICE PRODUCT DETECTION STATION
POSTE D'ENREGISTREMENT D'ARTICLES EN LIBRE SERVICE

(30) Priorität: 22.02.2002 DE 10207568
(43) Veröffentlichungstag der Anmeldung: 17.11.2004
(73) Patentinhaber: Wincor Nixdorf International GmbH, 33106 Paderborn (DE)
(72) Erfinder: BAITZ, Guenter, 13629 Berlin (DE); SOMMER, Heinz, 14789 Wusterwitz (DE)
(86) Internationale Anmeldenummer: PCT/DE2003/000396
(87) Internationale Veröffentlichungsnummer: WO 2003/071903

(56) Entgegenhaltungen:
- EP-A- 0 498 311
- US-A- 5 426 282
- US-A- 5 965 861
- US-A- 5 979 757

## Beschreibung

Die Erfindung betrifft einen Selbstbedienungs-Warenerfassungsplatz nach dem Oberbegriff des Anspruchs 1 (Siehe die Druckschrift EP-A-0 498 311).

Es sind verschiedene Selbstbedienungs-Warenerfassungsplätze bekannt, bei denen die vom Kunden ausgewählten Waren erfasst und eine automatische Abrechnung erstellt wird. Der Kunde bringt hierzu die in der Regel in einen Einkaufswagen abgelegten Waren zu einem Warenerfassungsplatz und führt sie einem Abtastvorgang zu, bei dem normalerweise der auf den Waren befindliche Barcode mittels eines Barcodelesers abgetastet wird. Danach werden die Waren in eine Ablage gelegt, die auch ein weiterer Einkaufswagen oder eine Einkaufstüte sein kann, die mit einer Waage gekoppelt ist. Beim Identifizieren der Waren durch Abtasten des Barcodes werden der Warenpreis und die Warenart ermittelt. Handelt es sich bei den Waren um auszuwiegende Produkte wie Obst und Gemüse, so können diese gewogen werden, wobei zuvor die Warenart beispielsweise an einem Touchscreen ausgewählt werden kann, um den korrekten Preis für diese Produkte zu ermitteln. Legt nun der Kunde die Waren in die Ablage, so werden diese nochmals gewogen und das Wiegeergebnis wird mit dem Gewicht verglichen, das für diese Warenart vorgesehen ist bzw. mit dem Gewicht, das bei der Gewichtserfassung von einzeln auszuwiegenden Produkten ermittelt worden ist. Stimmen die Vergleichsgrössen überein, so kann eine Fehlauswertung bzw. ein Betrugsversuch ausgeschlossen werden.

Hat jedoch der Kunde tatsächlich einen Artikel nicht gescannt, so ist es oft sehr schwierig herauszufinden, um welchen Artikel es sich denn handelt, da eine eindeutige Bestimmung der Artikel über das Gewicht nicht möglich ist. Beispielsweise werden viele Lebensmittel als 500 g Packungen angeboten.

Aufgabe der Erfindung ist es daher, eine sichere und schnelle Nacherfassung von nicht eingescannten Artikeln zu ermöglichen.

Diese Aufgabe wird durch die in Anspruch 1 angegebenen Merkmale gelöst. Durch die Anbringung einer Kamera über der Wiegeschale werden die Artikel, die nicht gescannt worden sind, erfasst. Die Kamera wird aktiviert, wenn die Gewichtsangabe der Wiegeschale sich ändert, ohne dass ein Artikel gescannt worden ist. Die Kamera erfasst somit den zuletzt auf die Wiegeschale gelegten Artikel und übermittelt dieses Bild auf das Display einer Bedienperson, die somit über den nicht eingescannten Artikel informiert wird und entsprechend den Kunden auffordern kann, den versehentlich nicht erfassten Artikel noch nachzuerfassen.

Weitere Einzelheiten und Vorteile der Erfindung ergeben sich aus der nachfolgenden Beschreibung und der Zeichnung.

In der Zeichnung zeigen:

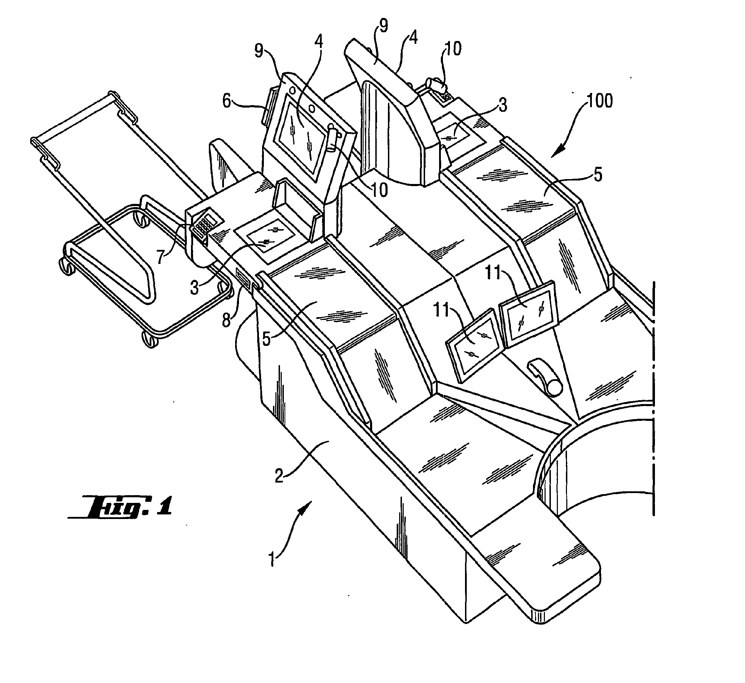

- Fig. 1:: eine perspektivische Ansicht eines Selbst-bedienungs-Warenerfassungsplatzes gemäss der Erfindung.

In Fig. 1 ist ein Selbstbedienungs-Warenerfassungsplatz 1 dargestellt bestehend aus einem Trägergehäuse 2, das mit einem Barcodeleser 3 mit einer integrierten Waage für die Erfassung von Stückgütern wie Obst und Gemüse, einem Display 4 zur Eingabe von Artikelbezeichnungen und Anzeige von Kundeninformationen wie den Preis, das Gewicht, die Warenart etc. sowie einer Wiegeschale 5 ausgestattet ist. Des weiteren sind vorteilhafterweise ein-Durchzugskartenleser 6 für Kreditkarten und ec-Karten, eine PIN-Eingabetastatur 7 sowie ein Karteneinzugsleser 8 vorgesehen. Ein Kunde bringt in der Regel die in einem Einkaufswagen gesammelten Waren zu dem Selbstbedienungs-Warenerfassungsplatz 1, nimmt die Waren aus dem Wagen und scannt sie über den Barcodeleser 3, der einen an den Waren angebrachten Barcode erfasst. Im Rahmen der Erfindung sind auch andere Kennzeichnung wie dreidimensionale Codes und Transponder möglich. Handelt es sich um Obst oder Gemüse, so wählt der Kunde an der Tastatur die jeweilige Obst- oder Gemüsesorte aus und dann wird der Preis abhängig von dem mittels der integrierten Waage erfassten Gewicht ermittelt. Nun legt der Kunde die Waren auf die zweite Wiegeschale, auf der das Gewicht aller bereits erfassten Waren summiert wird. Hat der Kunde alle Waren eingescannt und stimmt das Gewicht der auf die Wiegeschale gelegten Waren immer mit dem Gewicht überein, das sich aus der Warenscannung ergibt anhand des dem jeweiligen Artikel zugeordneten Gewichtes, so drückt der Kunde am Ende des Vorgangs eine Taste, um zu signalisieren, dass nun alle Waren erfasst sind und leitet damit den Bezahlvorgang ein. Am Display wird der Gesamtpreis angezeigt und der Kunde kann nun mittels einer Kreditkarte oder seiner ec-Karte die Rechnung bezahlen.

Hat der Kunde jedoch versehentlich oder bewusst einen Artikel nicht eingescannt, so weicht das von der Wiegeschale 5 erfasst Gewicht von dem Gewicht ab, das sich anhand der Warenscannung ergeben würde. Aufgrund dieser Gewichtsdifferenz wird nun die vorteilhafterweise am Displaygehäuse 9 befestigte Videokamera 10 aktiviert, die ein Bild der auf der Wiegeschale aufliegenden Artikel erfasst und dieses Bild an ein zweites Display 11 weiterleitet. Dieses Display 11 wird von einer Bedienperson beobachtet, die aufgrund des Bildes den Kunden anweisen kann, den zuletzt auf die Wiegeschale 5 gelegten Artikel nachzuerfassen. Da der Artikel anhand des Bildes erfasst ist, kann er dem Kunden nachweisen, welchen Artikel er beim Einscannen übersehen hat. Es wird durch die Bilderfassung vermieden, den Artikel allein anhand seines Gewichts identifizieren zu müssen. Da Artikel mit gleichem Gewicht einen sehr unterschiedlichen Preis haben könnnen, hätte der Kunde bisher einen Artikel nachträglich einscannen können, der zwar hinsichtlich seines Gewichtes mit dem nicht eingescannten Artikel identisch ist, aber nicht in bezug auf den Preis.

Vorzugsweise sind zwei Selbstbedienungs-Warenerfassungsplätze 1, 100 zusammengefasst, so dass eine Bedienperson zwei Selbstbedienungs-Warenerfassungsplätze 1, 100 gemeinsam kontrollieren kann. Das Display 11 kann bei einer derartigen Anordnung zweifach vorhanden sein, oder es wird ein geteilter Bildschirm gewählt, wobei jeweils ein Teil des Bildschirms für einen Selbstbedienungs-Warenerfassungsplatz zur Verfügung steht. Vorteilhafterweise kann diese Bedienperson dem Kunden auch noch beim Einpacken der Waren behilflich sein. Im Rahmen der Erfindung ist es auch möglich, weitere Selbstbedienungs-Warenerfassungsplätze zu einem Selbstbedienungszentrum zu verbinden, die jeweils von einer Bedienperson beaufsichtigt werden. Das Display 11 ist erfindungsgemäss als tragbares Gerät ausgebildet, das die Bedienperson trägt oder das an dessen Kleidung befestigt ist. Hierbei ist das Display vorzugsweise miniaturisiert ausgebildet.

## Patentansprüche

1. Selbstbedienungs-Warenerfassungsplatz mit einer Lesevorrichtung (3) zur Erfassung der Waren, einer ersten Waage zum Wiegen von Stückgütern, einem Display (4) zur Anzeige und Eingabe von Informationen, einer zweiten Wiegeschale (5) und einem Kartenleser zum Bezahlen der Waren, einer Videokamera (10) zum Erfassen der Waren auf der zweiten Wiegeschale (5), wobei ein von der Kamera (10) erfaßtes Bild an ein Display (11) weitergeleitet wird, **dadurch gekennzeichnet, dass** das Display (11) tragbar ausgebildet ist.

2. Selbstbedienungs-Warenerfassungsplatz nach Anspruch 1, **dadurch gekennzeichnet, dass** zwei Selbstbedienungs-Warenerfassungsplätze (1, 100) zusammengefasst sind und gemeinsam mittels des Displays (11) überwacht werden können.

## Claims

1. Self-service product detection station with a reading device (3) for detecting the products, a first balance for weighing loose items, a display (4) for the display and input of information, a second weighing scale (5) and a card reader for payment for the products, a video camera (10) for registering the products on the second weighing scale (5), an image registered by the camera (10) being passed on to a display (11), **characterized in that** the display (11) is portable.

2. Self-service product detection station according to Claim 1, **characterized in that** two self-service product detection stations (1, 100) are combined and can be overseen together by means of the display (11).

## Revendications

1. Poste d'enregistrement de marchandises en libre service, comportant un dispositif de lecture (3) pour enregistrer les marchandises, une première balance pour peser des marchandises de détail, un afficheur (4) pour indiquer et pour entrer des informations, un deuxième plateau de balance (5) et un lecteur de cartes pour payer les marchandises, une caméra vidéo (10) pour enregistrer les marchandises sur le deuxième plateau de balance (5), une image enregistrée par la caméra (10) étant transmise à un afficheur (11), **caractérisé en ce que** l'afficheur (11) est portatif.

2. Poste d'enregistrement de marchandises en libre service selon la revendication 1, **caractérisé en ce que** deux postes d'enregistrement de marchandises en libre service (1, 100) sont rassemblés et qu'ils peuvent être surveillés ensemble à l'aide de l'afficheur (11).
